# EUROPÄISCHE PATENTSCHRIFT

(11) **EP 1 221 208 B1**
(45) Veröffentlichungstag und Bekanntmachung des Hinweises auf die Patenterteilung: **17.11.2004**
(21) Anmeldenummer: 00938531.1
(22) Anmeldetag: 03.05.2000
(51) Int. Cl.: H04B 7/005

(54) **SCHALTUNGSANORDNUNG ZUM REGELN DER SENDELEISTUNG EINER SENDEVORRICHTUNG**
CIRCUIT ARRANGEMENT FOR CONTROLLING THE TRANSMITTER POWER OF A TRANSMITTING DEVICE
CIRCUIT POUR REGULER LA PUISSANCE D'EMISSION D'UN DISPOSITIF EMETTEUR

(30) Priorität: 12.10.1999 DE 19949182
(43) Veröffentlichungstag der Anmeldung: 10.07.2002
(73) Patentinhaber: SIEMENS AKTIENGESELLSCHAFT, 80333 München (DE)
(72) Erfinder: BOLLENBECK, Jan, D-80469 München (DE)
(86) Internationale Anmeldenummer: PCT/DE2000/001391
(87) Internationale Veröffentlichungsnummer: WO 2001/028123

(56) Entgegenhaltungen:
- EP-A- 0 688 108
- GB-A- 2 330 987
- US-A- 4 392 245
- US-A- 5 852 770

## Beschreibung

Die vorliegende Erfindung betrifft eine Schaltungsanordnung nach dem Oberbegriff des Anspruches 1, welche insbesondere in Mobilfunkgeräten zur Regelung der Sendeleistung einsetzbar ist.

Gemäß dem derzeit in seiner Entwicklung befindlichen UMTS-Mobilfunkstandard ("Universal Mobile Telecommunication System") für Mobilfunkgeräte der dritten Generation sind zwei unterschiedliche Modi vorgesehen, in denen eine Regelung der Sendeleistung erfolgen kann. Bei der sogenannten "Open Loop Power Control" muß der Sender, beispielsweise ein Mobilfunkgerät, die von ihm abgestrahlte Hochfrequenzleistung auf einen von dem jeweiligen Empfänger, z.B. einer Basisstation, vorgegebenen Leistungspegel regeln, wobei dies innerhalb spezifizierter Toleranzbänder zu geschehen hat. In der obersten Leistungsstufe beträgt die Toleranz ±2dB, während die Toleranz ansonsten ±9dB unter normalen Betriebsbedingungen bzw ±12dB unter extremen Betriebsbedingungen beträgt. Bei der sogenannten "Closed Loop Power Control" empfängt hingegen das Mobilfunkgerät von der Basisstation periodisch (insbesondere in Abständen von 625µs) Leistungsregelungsinformationen in Form sogenannter TPC-Bits ("Transmit Power Control"), wodurch das Mobilfunkgerät angewiesen wird, seinen Sendeleistungspegel um einen bestimmten Betrag, beispielsweise 1dB, zu erhöhen oder zu verringern, wobei der Toleranzzbereich jeweils zwischen 0,5dB und 1,5dB liegen kann. Bei dieser Leistungsregelung im eigentlichen Sinne wird die Regelschleife über die Luftschnittstelle geschlossen, da die Leistungsregelungsinformationen von der Basisstation in Abhängigkeit von einer Auswertung des Empfangspegels eines vorhergehenden Sendesignals des Mobilfunkgeräts erzeugt werden.

Die Regelung der Sendeleistung erfordert einen sehr hohen Dynamikbereich, der in der Regel insbesondere größer als 65dB ist. Zudem muß der Pegel der Sendeleistung, wie bereits oben erwähnt worden ist, in der obersten Leistungsstufe auf ±2dB genau eingehalten werden. Diese Anforderung läßt sich ohne aufwendige Kompensationsmechanismen, welche u.a. Temperaturund Frequenzgänge sowie Bauteilstreuung und Alterung ausgleichen, nur mit einer im Mobilfunkgerät integrierten Leistungsregelung erfüllen.

Eine Schaltungsanordnung zur internen Leistungsregelung ist beispielsweise aus der EP 0 523 718 B1 bekannt. Diese Schaltungsanordnung umfaßt einen Verstärker mit variablem Verstärkungsfaktor ("Variable Gain Amplifier", VGA), welcher die zu regelnde Sendeleistung empfängt und gemäß dem einstellbaren Verstärkungsfaktor verstärkt. Die von diesem Verstärker ausgegebene verstärkte Sendeleistung wird einem Leistungsrichtkoppler zugeführt, der einen Teil dieser Sendeleistung auskoppelt und einem Hüllkurvendetektor zuführt, der davon abhängig eine entsprechende Ausgangsspannung generiert. Die Ausgangsspannung des Hüllkurvendetektors wird mit Hilfe eines Differenzverstärkers mit einer vorgebbaren Referenzspannung oder Führungsgröße verglichen, wobei der Differenzverstärker abhängig von der Abweichung zwischen dem Ausgangssignal des Hüllkurvendetektors und der Referenzspannung ein Stellsignal für den Verstärker erzeugt, um dessen Verstärkungsfaktor entsprechend einzustellen.

Eine Schaltungsanordnung nach dem Oberbegriff des Anspruchs 1 ist aus der US-A-5 852 770 bekannt.

Neben dieser Hardwarelösung sind auch Softwarelösungen bekannt, bei denen für den Verstärkungspfad Kompensationswerte in Tabellen (sogenannten "Lookup Tables") zur Kompensation von Temperatur- oder Frequenzeinflüssen, Bauteiltoleranzen oder Alterung abgelegt sind. Dieser Lösungsansatz ist jedoch wegen des benötigten Speicherbedarfs und des Aufwands des durchzuführenden Abgleichs nachteilig.

Der vorliegenden Erfindung liegt die Aufgabe zugrunde, eine Schaltungsanordnung zur Regelung der Sendeleistung einer Sendevorrichtung, beispielsweise eines Mobilfunkgeräts, vorzuschlagen, die bei verbesserter Flexibilität mit einem geringen Hardwareaufwand eine wirkungsvolle Einstellung der Sendeleistung ermöglicht.

Diese Aufgabe wird erfindungsgemäß durch eine Schaltungsanordnung mit den Merkmalen des Anspruches 1 gelöst. Die Unteransprüche definieren jeweils bevorzugte und vorteilhafte Ausführungsformen der vorliegenden Erfindung.

Die erfindungsgemäße Schaltungsanordnung umfaßt einen an sich bekannt aufgebauten Regelkreis mit einem Verstärker, dessen Verstärkungsfaktor variabel und somit einstellbar ist. Darüber hinaus ist eine Steuereinheit vorgesehen, welche eine Umschaltung zwischen einer Leistungsregelung mit einem geschlossenem Regelkreis und einer Leistungssteuerung ermöglicht, wobei im Steuerbetrieb der Regelkreis von der Steuereinheit deaktiviert wird, und zwar erfolgt die Umschaltung auf die Leistungsregelung nur in den oberen Leistungsstufen, d.h. im oberen Sendeleistungsbereich, wobei als Grenzwert hierzu insbesondere eine gegenüber der maximalen Sendeleistung um 2dB niedrigere Sendeleistung verwendet werden kann. In den anderen Leistungsstufen wird lediglich eine Steuerung der Sendeleistung durchgeführt, wobei in diesem Fall dem variablen Verstärker ein ungeregeltes Steuersignal zur Einstellung seines Verstärkungsfaktors zugeführt wird.

Eine in den Unteransprüchen näher definierte Ausgestaltung der Erfindung ermöglicht, daß beim Umschalten von dem Regelbetrieb auf den Steuerbetrieb die vor dem Umschalten vorliegende geregelte Steuerspannung für den Verstärker auch im nachfolgenden Steuerbetrieb zum Einstellen des Verstärkers verwendet werden kann. Vorzugsweise ist eine weitere Regelschleife vorgesehen, die es ermöglicht, im Steuerbetrieb eine Hilfsspannung zu generieren, welche im geregelten Betrieb als Führungsgröße an den Differenzverstärker der Regelung angelegt werden müßte, um die augenblickliche Ausgangsleistung des Verstärkers zu erhalten. Dies ist u.a. insofern vorteilhaft, da diese Spannung dann bei einem späteren Umschalten vom Steuerbetrieb auf den Regelbetrieb als Führungsgröße an den Differenzverstärker angelegt werden kann.

Diese Hilfsspannung entspricht aufgrund der speziellen Auslegung der weiteren Regelschleife der temperaturkompensierten Ausgangsspannung der Detektorschaltung und ist daher ein weitgehend temperaturunabhängiges Maß für die Ausgangsleistung des Sendeverstärkerzuges bzw. eines darin enthaltenen Leistungsverstärkers. Da im gesteuerten Betrieb somit sowohl die momentane Ausgangsleistung als auch die korrespondierende Steuerspannung bekannt sind, kann unter Zuhilfenahme einer beispielsweise bei Raumtemperatur auf einer einzigen Frequenz ermittelten Verstärkerkennlinie das bei den aktuellen Betriebsbedingungen vorliegende Verstärkerverhalten berechnet werden. Hierdurch können im "Open Loop Power Control"-Modus direkte Pegelsprünge sehr genau durchgeführt werden.

Durch die Möglichkeit der Leistungsregelung ist insbesondere in den oberen Leistungsstufen ein geregeltes sogenanntes "Up-Ramping" möglich, wobei die durch den jeweiligen Mobilfunkstandard spezifizierten Toleranzbereiche leicht eingehalten werden können. Bei aktiver Regelung der Sendeleistung wird die Genauigkeit des Sendeleistungspegels im wesentlichen durch den in der Schaltungsanordnung verwendeten Detektor bestimmt. Temperatur-, Frequenz-, Bauteil- und Alterungseinflüsse werden ausgeregelt. Wird zur Erhöhung des Wirkungsgrads eines im Verstärkerzweig zusätzlich verwendeten Leistungsverstärkers eine sogenannte Bias-Regelung des Leistungsverstärkers eingesetzt, können mit Hilfe der Leistungsregelung auch die durch eine derartige Bias-Regelung möglicherweise auftretenden Verstärkungsschwankungen ausgeregelt werden.

Insgesamt wird eine gattungsgemäße Schaltungsanordnung mit einem geringen Hardwareaufwand vorgeschlagen. Die Erfindung eignet sich beispielsweise zum Einsatz in Mobilfunkgeräten, insbesondere in UMTS-Mobilfunkgeräten, welche gemäß dem CDMAoder W-CDMA-Vielfachzugriffsverfahren ("Code Division Multiple Access") betrieben werden, wobei jedoch die Erfindung selbstverständlich nicht auf diesen Anwendungsbereich beschränkt ist.

Die vorliegende Erfindung wird nachfolgend unter Bezugnahme auf die beigefügte Zeichnung anhand eines bevorzugten Ausführungsbeispiels erläutert.
Fig. 1 zeigt ein vereinfachtes Blockschaltbild einer Schaltungsanordnung zum Regeln der Sendeleistung einer Sendevorrichtung gemäß einem Ausführungsbeispiel der vorliegenden Erfindung, und
Fig. 2 zeigt eine Darstellung von Signalverläufen zur Erläuterung des Betriebs der in Fig. 1 gezeigten Schaltungsanordnung.

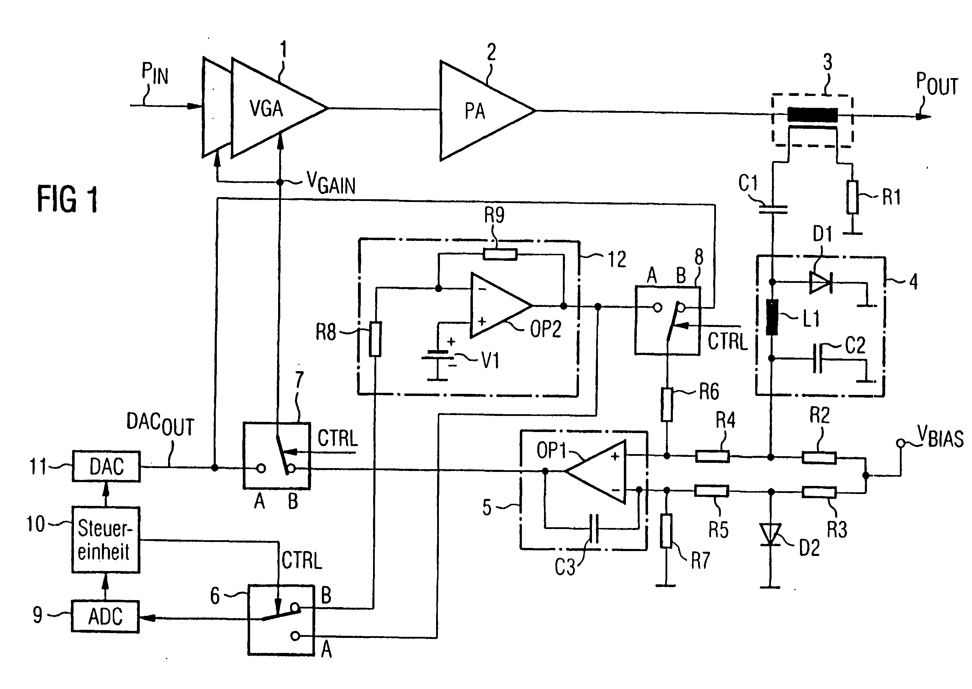

Die in Fig. 1 gezeigte Schaltungsanordnung umfaßt im wesentlichen einen Verstärker 1 mit variablem Verstärkungsfaktor ("Variable Gain Amplifier", VGA), einen dem Verstärker 1 nachgeschalteten Leistungsverstärker 2 ("Power Amplifier", PA), einen Leistungskoppler 3, eine Detektorschaltung 4, eine Differenzverstärkerschaltung 5, eine invertierende Verstärkerschaltung 12 sowie eine gemäß Fig. 1 über einen AD-Wandler 9 (ADC) bzw. einen DA-Wandler 11 (DAC) verschaltete Steuereinheit 10 zur Erzeugung eines Steuersignals CTRL für steuerbare Analogschalter 6-8. Die Funktionen des AD-Wandlers 9 bzw. DA-Wandlers 11 können auch in die Steuereinheit 10 integriert sein.

Zur Regelung der Sendeleistung befinden sich die steuerbaren Schalter 6-8 jeweils in ihrer Stellung "B".

Der Verstärker 1 empfängt eine zu regelnde Sendeleistung P_{IN} und verstärkt diese mit einem bestimmten Verstärkungsfaktor, welcher gemäß einer an den Verstärker 1 angelegten Steuerspannung V_{GAIN} eingestellt worden ist. Über den gemäß Fig. 1 mit einem Widerstand R1 und einem Kondensator C1 verschalteten Leistungskoppler 3 wird ein Teil der von den Verstärkern 1 und 2 verstärkten Sendeleistung P_{OUT} ausgekoppelt und dem Detektor 4 zugeführt, der bei dem dargestellten Ausführungsbeispiel eine Diode D1, eine Spule L1 und einen Kondensator C2 umfaßt. Das von dem Detektor 4 gelieferte Ausgangssignal wird über ein Widerstandsnetzwerk mit Widerständen R2-R7 der Differenzverstärkerschaltung 5 zugeführt, wobei mit dem Widerstandsnetzwerk als Temperaturkompensationselement eine weitere Diode D2 gekoppelt ist, welche wie die Detektordiode D1 mit einer Bias-Spannung V_{BIAS} betrieben wird. Bei dem in Fig. 1 gezeigten Ausführungsbeispiel ist die Differenzverstärkerschaltung 5 in Form einer Integrationsverstärkerschaltung ausgestaltet und umfaßt einen Operationsverstärker OP1 und einen Rückkopplungskondensator C3. Von dem Operationsverstärker OP1 wird auf diese Weise ein Ausgangssignal generiert, welche von der Differenz zwischen dem Ausgangssignal des Detektors 4 und einem über den Widerstand R6 und dem in der Stellung "B" befindlichen steuerbaren Schalter 8 an den Operationsverstärker OP1 angelegten Referenzsignal abhängig ist. Das Referenzsignal wird dabei von dem DA-Wandler 11 bzw. der Steuereinheit 10 vorgegeben. Das Ausgangssignal des Operationsverstärkers OP1 wird über den in der Stellung "B" befindlichen Schalter 7 dem Verstärker 1 zugeführt und dient als Steuersignal V_{GAIN} zur Einstellung dessen Verstärkungsfaktors. Es liegt somit ein geschlossener Regelkreis vor, wobei die Regelung der Sendeleistung auf an sich bekannte Art und Weise erfolgt.

Mit der in Fig. 1 gezeigten Schaltungsanordnung ist jedoch nicht nur eine Regelung, sondern auch eine Steuerung der Sendeleistung möglich. Dabei dient die Steuereinheit 10 in Kombination mit den steuerbaren Schalter 6-8 zum Umschalten zwischen dem Regelbetrieb und dem Steuerbetrieb. Die Umschaltung auf den Steuerbetrieb erfolgt insbesondere bei kleineren Leistungsstufen, so daß nur in den oberen Leistungsstufen die Leistungsregelung durchgeführt wird.

Vor der Umschaltung auf die Leistungssteuerung wird von der Steuereinheit 10 über den AD-Wandler 9 die augenblickliche Ausgangsspannung des Regelverstärkers OP1 ausgelesen und der DA-Wandler 11 mit dem dieser Ausgangsspannung entsprechenden Datenwort programmiert. Gleichzeitig zu dieser Programmierung wird das von der Steuereinheit 10 ausgegebene Steuersignal CTRL auf "HIGH" gesetzt, so daß die Schalter 6-8 jeweils in die Stellung "A" umgeschaltet werden. Über den Schalter 7 wird somit die Ausgangsspannung DAC_{OUT} des DA-Wandlers 11 unmittelbar als Steuerspannung V_{GAIN} dem Verstärker 1 zugeführt, um dessen variablen Verstärkungsfaktor entsprechend einzustellen. Der zuvor beschriebene Regelkreis ist durch den in der Stellung "A" befindlichen Schalter 7 unterbrochen, so daß anstelle einer Regelung nunmehr eine Steuerung der Sendeleistung erfolgt.

Befindet sich die Ausgangs-Sendeleistung P_{OUT}, welche sich in diesem Steuerbetrieb einstellt, innerhalb des Arbeitsbereichs des Detektors 4, wird über die invertierende Verstärkerschaltung 12 und die Differenzverstärkerschaltung 5 ein weiterer Regelkreis geschlossen. Die invertierende Verstärkerschaltung 12 umfaßt gemäß Fig. 1 einen invertierenden Operationsverstärker OP2, der mit Widerständen R8, R9 und einer Spannungsquelle V1 verschaltet ist. Im Steuerbetrieb ist der Ausgang des invertierenden Operationsverstärkers OP2 über den in der Stellung "A" befindlichen Schalter 8 und den Widerstand R6 mit dem positiven Eingang des Differenzverstärkers OP1 verbunden. Zudem ist das Ausgangssignal des invertierenden Operationsverstärkers OP2 dem AD-Wandler 9 über den in der Stellung "A" befindlichen Schalter 6 zugeführt. Im eingeschwungenen Zustand dieses zusätzlichen Regelkreises liegt am Ausgang des invertierenden Operationsverstärkers OP2 und somit auch am Eingang des AD-Wandlers 9 eine Spannung an, deren Betrag der um den Temperaturgang des Detektors korrigierten Ausgangsspannung des Detektors 4 entspricht. Zudem entspricht diese Spannung derjenigen Ausgangsspannung DAC_{OUT} des DA-Wandlers 11, welche im Regelbetrieb in Form der Steuerspannung V_{GAIN} an den Verstärker 1 angelegt werden müßte, um durch entsprechende Einstellung dessen Verstärkungsfaktors dieselbe Ausgangs-Sendeleistung P_{OUT} zu erhalten.

Vor einer Umschaltung von der Leistungssteuerung auf die Leistungsregelung wird diese Ausgangsspannung des invertierenden Operationsverstärkers OP2 über den AD-Wandler 9 ausgelesen und der DA-Wandler 11 mit dem dieser Ausgangsspannung entsprechenden Datenwort programmmiert. Gleichzeitig mit der Programmierung des DA-Wandlers 11 wird von der Steuereinheit 10 das Steuersignal CTRL auf "LOW" gesetzt, wodurch die Schalter 6-8 auf die Stellung "B" umgeschaltet werden, so daß die zuvor erwähnte Spannung in Form der Ausgangsspannung DAC_{OUT} des DA-Wandlers 11 über den Schalter 8 als Führungs- oder Referenzgröße für den über den Schalter 7 nunmehr wieder geschlossenen Regelkreis dient. Der zusätzliche Regelkreis mit dem invertierenden Verstärker OP2 dient somit dazu, im Steuerbetrieb eine Anfangsführungsgröße für einen späteren Regelbetrieb zu ermitteln.

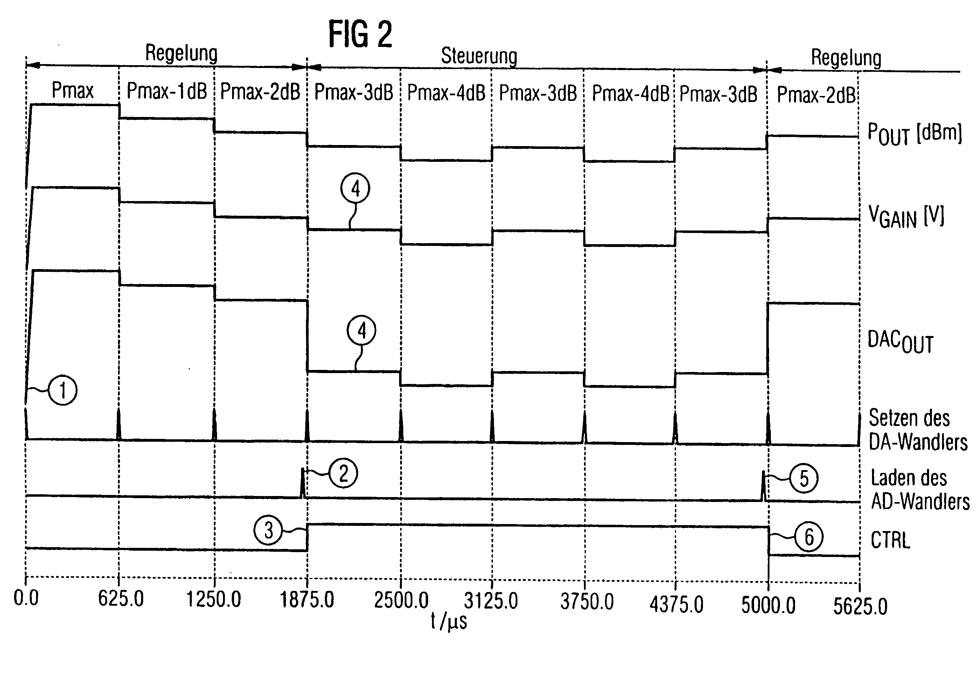

Der zuvor erläuterte Betrieb der in Fig. 1 gezeigten Schaltungsanordnung kann auch den in Fig. 2 gezeigten Signalverläufen entnommen werden, wobei jeweils zeitabhängig der Verlauf der auf einen maximalen Sendeleistungswert Pₘₐₓ bezogenen Ausgangs-Sendeleistung P_{OUT}, der Steuerspannung V_{GAIN}, der Ausgangsspannung DAC_{OUT} des DA-Wandlers 11 und des Steuersignals CTRL dargestellt ist. Zudem sind in Form von Impulsen diejenigen Zeitpunkte dargestellt, bei denen der DA-Wandler 11 jeweils mit einem bestimmten Digitalwort programmiert bzw. der AD-Wandler 9 mit einem bestimmten Analogwert geladen wird. Solange sich die Ausgangs-Sendeleistung POUT innerhalb des Bereichs Pₘₐₓ...Pₘₐₓ-2dB befindet, erfolgt die zuvor beschriebene Regelung der Sendeleistung. Mit (1) ist in Fig. 2 das sich in diesem oberen Leistungsbereich dabei einstellende geregelte Up-Ramping der Sendeleistung bezeichnet. Zu einem mit (2) bezeichneten Zeitpunkt soll die Sendeleistung auf den Wert Pₘₐₓ-3dB eingestellt werden. Damit wird der Regelungsbereich verlassen, so daß auf den Steuerbetrieb umgeschaltet wird. Zuvor wird der AD-Wandler 9 mit dem Ausgangssignal des Operationsverstärkers OP1 geladen. Gleichzeitig mit dem anschließenden Programmieren des DA-Wandlers 11 erfolgt dann über das Steuersignal CTRL zum Zeitpunkt (3) das.Umschalten der Schalter 6-8 in die Stellung "A". Während des Steuerbetriebs entspricht die Steuerspannung V_{GAIN} des Verstärkers 1 der Ausgangsspannung DAC_{OUT} des DA-Wandlers 11, was in Fig. 2 mit (4) bezeichnet ist. Sobald wieder eine Sendeleistung eingestellt werden soll, welche innerhalb des Bereichs Pₘₐₓ...Pₘₐₓ-2dB liegt, wird von der Steuereinheit 10 wieder in den Regelbetrieb umgeschaltet. Zuvor wird jedoch zu einem Zeitpunkt (5) von dem AD-Wandler 9 das Ausgangssignal des in Fig. 1 gezeigten invertierenden Operationsverstärkers OP2 erfaßt. Anschließend wird der DA-Wandler 11 mit einem diesem Ausgangssignal entsprechenden Datenwort programmiert und die Schalter 6-8 über das Steuersignal CTRL gleichzeitig in die Stellung "B" umgeschaltet, so daß anschließend wieder eine Regelung der Sendeleistung durchgeführt werden kann.

Da sowohl im Regelbetrieb als auch im Steuerbetrieb innerhalb des Arbeitsbereichs des Detektors 4 die Steuerspannung V_{GAIN} und die jeweilige Sendeleistung P_{OUT} bekannt sind (im Steuerbetrieb kann die Ausgangs-Sendeleistung aus der Ausgangsspannung des invertierenden Operationsverstärkers OP2 abgeleitet werden), können im Steuerbetrieb bzw. im UMTS-"Open Loop Power Control"-Modus direkte Pegelsprünge der Sendeleistung sehr genau durchgeführt werden. Hierzu wird eine Kennlinie in einem Speicher der Steuereinheit 10 abgelegt, welche bei einer bestimmten Umgebungstemperatur und Frequenz die Abhängigkeit der Ausgangs-Sendeleistung P_{OUT} von V_{GAIN} angibt. Unter der Voraussetzung, daß das entsprechende Mobilfunkgerät während seiner Fertigung entsprechend abgeglichen worden ist, kann die Steuereinheit 10 dann für direkte Pegelsprünge aus der abgelegten Kennlinie, der Steuerspannung V_{GAIN}, der Ausgangsspannung des invertierenden Operationsverstärkers OP2 bzw. der Ausgangs-Sendeleistung P_{OUT} die jeweils benötigten Parameterwerte berechnen, um die gewünschte Ausgangs-Sendeleistung P_{OUT} zu erhalten. Parameter für Pegelsprünge innerhalb von Pegelbereichen, die unterhalb des Detektorarbeitsbereiches liegen, können aus den vorhandenen Daten extrapoliert werden.

## Patentansprüche

1. Schaltungsanordnung zum Regeln der Sendeleistung einer Sendevorrichtung,
wobei die Schaltungsanordnung einen Regelkreis aufweist, welcher umfaßt:
- eine Verstärkerschaltung (1,2) mit einem variablen Verstärkungsfaktor zum Verstärken einer Eingangs-Sendeleistung (P_{IN}) der Sendevorrichtung gemäß dem von einem Steuersignal (V_{GAIN}) einstellbaren variablen Verstärkungsfaktor,
- eine Detektorschaltung (3,4) zum Erfassen eines Ausgangssignals der Verstärkerschaltung (1,2), und
- eine Vergleichsschaltung (5) zum Vergleichen des von der Detektorschaltung (3,4) erfaßten Ausgangssignals mit einem Referenzsignal und zum Erzeugen des Steuersignals (V_{GAIN}) für die Verstärkerschaltung (1,2) in Abhängigkeit von dem Vergleichsergebnis, wobei
Steuermittel (10) zum Umschalten zwischen einer Regelung und einer Steuerung der Sendeleistung vorgesehen sind,
wobei die Steuermittel (10) derart ausgestaltet sind, daß sie zur Steuerung der Sendeleistung den Regelkreis deaktivieren und ein ungeregeltes Steuersignal (V_{GAIN}) der Verstärkerschaltung (1,2) zur entsprechenden Einstellung deren variablen Verstärkungsfaktors zuführen, **dadurch gekennzeichnet, daß** die Steuermittel (10) derart ausgestaltet sind, daß sie den Regelkreis (1,3,4,5) zur Regelung der Sendeleistung nur in einem oberhalb eines bestimmten Grenzwerts gelegenen Bereich der von der Verstärkerschaltung (1,2) gelieferten Ausgangs-Sendeleistung (P_{OUT}) aktivieren, während die Steuermittel (10) den Regelkreis (1,3,4,5) zur Durchführung der Steuerung der Sendeleistung deaktivieren, falls die Ausgangs-Sendeleistung (P_{OUT}) unterhalb des Grenzwerts liegt, wobei ein Grenzwert verwendet wird, so daß die Regelung der Sendeleistung nur im oberen Sendeleistungs-bereich aktiviert wird.

2. Schaltungsanordnung nach Anspruch 1, **dadurch gekennzeichnet,**
**daß** der Grenzwert ca. 2dB unterhalb einer maximalen Ausgangs-Sendeleistung (P_{OUT}) der Verstärkerschaltung (1,2) liegt.

3. Schaltungsanordnung nach einem der vorhergehenden Ansprüche,
**dadurch gekennzeichnet,**
**daß** die Steuermittel (10) mit einem AD-Wandler (9) verbunden sind, welcher andererseits über einen ersten steuerbaren Schalter (6) mit dem Ausgang der Vergleichsschaltung (5) verbunden ist, falls sich der erste steuerbare Schalter (6) in einer ersten Position (B) befindet, und
**daß** die Steuermittel (10) mit einem DA-Wandler (11) verbunden sind, welcher andererseits über einen zweiten steuerbaren Schalter (7) zur Zuführung des Steuersignals (V_{GAIN}) mit der Verstärkerschaltung (1,2) verbunden ist, falls sich der zweite steuerbare Schalter (7) in einer zweiten Position (A) befindet, während der Ausgang der Vergleichsschaltung (5) über den zweiten steuerbaren Schalter (7) zur Zuführung des Steuersignals (V_{GAIN}) mit der Verstärkerschaltung (1,2) verbunden ist, falls sich der zweite steuerbare Schalter (7) in einer ersten Position (B) befindet.

4. Schaltungsanordnung nach Anspruch 3,
**dadurch gekennzeichnet,**
**daß** der erste und zweite steuerbare Schalter (6,7) von den Steuermitteln (10) zur Regelung der Sendeleistung jeweils in seine erste Position (B) geschaltet wird,
**daß** die Steuermittel (10) derart ausgestaltet sind, daß sie vor einer Umschaltung von der Regelung auf die Steuerung der Sendeleistung über den AD-Wandler (9) die Ausgangsspannung der Vergleichsschaltung (5) auslesen und dem DA-Wandler (11) zuführen, und
**daß** die Steuermittel (10) derart ausgestaltet sind, daß sie von der Regelung auf die Steuerung der Sendeleistung umschalten, indem der erste und zweite steuerbare Schalter (6,7) je weils von seiner ersten Position (B) in seine zweite Position (A) geschaltet wird.

5. Schaltungsanordnung nach einem der vorhergehenden Ansprüche,
**dadurch gekennzeichnet,**
**daß** ein weiterer Regelkreis (12) vorgesehen ist, welcher von den Steuermitteln (10) im Steuerungsfall aktiviert wird, um diejenige Spannung zu generieren, welche im Regelungsfall der Vergleichsschaltung (5) als Referenzsignal zugeführt werden müßte, um die jeweils augenblickliche Ausgangs-Sendeleistung (P_{OUT}) zu erhalten.

6. Schaltungsanordnung nach Anspruch 5 und Anspruch 3 oder 4,
**dadurch gekennzeichnet,**
**daß** der weitere Regelkreis die Vergleichsschaltung (5) und eine invertierende Verstärkerschaltung (12) umfaßt,
**daß** die Vergleichsschaltung (5) eingangsseitig über einen dritten steuerbaren Schalter (8) mit dem Ausgang der invertierenden Verstärkerschaltung (12) verbunden ist, falls sich der dritte steuerbare Schalter in einer zweiten Position (A) befindet, während die Vergleichsschaltung (5) eingangsseitig über den dritten steuerbaren Schalter (8) mit dem Ausgang des DA-Wandlers (11) verbunden ist, falls sich der dritte steuerbare Schalter (8) in einer ersten Position (B) befindet, und
**daß** die invertierende Verstärkerschaltung (12) eingangsseitig mit dem Ausgang der Vergleichsschaltung (5) verbunden ist,
wobei die invertierende Verstärkerschaltung (12) eingangsseitig zudem über den ersten steuerbaren Schalter (6) mit dem AD-Wandler (9) verbunden ist, falls sich der erste steuerbare Schalter (6) in seiner ersten Position (B) befindet.

7. Schaltungsanordnung nach Anspruch 6,
**dadurch gekennzeichnet,**
**daß** der erste, zweite und dritte steuerbare Schalter (6-8) von den Steuermitteln (10) zur Steuerung der Sendeleistung jeweils in seine zweite Position (A) geschaltet wird,
**daß** die Steuermittel (10) derart ausgestaltet sind, daß sie vor einer Umschaltung von der Steuerung auf die Regelung der Sendeleistung über den AD-Wandler (9) die Ausgangsspannung der invertierenden Verstärkerschaltung (12) auslesen und dem DA-Wandler (11) zuführen, und
**daß** die Steuermittel (10) derart ausgestaltet sind, daß sie von der Steuerung auf die Regelung der Sendeleistung umschalten, indem der erste, zweite und dritte steuerbare Schalter (6-8) jeweils von seiner zweiten Position (A) in seine erste Position (B) geschaltet wird.

8. Schaltungsanordnung nach Ansprüche 6 oder 7,
**dadurch gekennzeichnet,**
**daß** die Steuermittel (10) Speichermittel zum Speichern einer Kennlinie umfassen, welche für verschiedene Ausgangs-Sendeleistungswerte (P_{OUT}) der Schaltungsanordnung die entsprechenden Steuersignalwerte (V_{GAIN}) für die Verstärkerschaltung (1,2) mit dem variablen Verstärkungsfaktor umfaßt, und
**daß** die Steuermittel (10) im Steuerungsfall anhand der Kennlinie und der aktuellen Werte des Steuersignals (V_{GAIN}) und der Ausgangsspannung der invertierenden Verstärkerschaltung (12) die für einen bestimmten Einstellwert der Ausgangs-Sendeleistung (P_{OUT}) erforderlichen Steuersignalwert (V_{GAIN}) ermittelt und generiert.

9. Schaltungsanordnung nach einem der vorhergehenden Ansprüche,
**dadurch gekennzeichnet,**
**daß** die Vergleichsschaltung (5) eine Differenzverstärkerschaltung ist, und
**daß** die Detektorschaltung (3,4) einen Leistungskoppler (3) umfaßt, um einen Teil der Ausgangs-Sendeleistung (P_{OUT}) der Verstärkerschaltung (1) mit dem variablen Verstärkungsfaktor auszukoppeln

10. Verwendung einer Schaltungsanordnung nach einem der vorhergehenden Ansprüche in einem Mobilfunkgerät zur Regelung bzw. Steuerung der Sendeleistung des Mobilfunkgeräts.

11. Verwendung nach Anspruch 10,
**dadurch gekennzeichnet,**
**daß** das Mobilfunkgerät ein gemäß dem CDMA-Vielfachzugriffsverfahren betriebenes Mobilfunkgerät ist.

## Claims

1. Circuit arrangement for regulating the transmission power of a transmission device,
whereby the circuit arrangement has a closed-loop control circuit comprising:
- an amplifier circuit (1,2) with a variable amplification factor to amplify an incoming transmission power (PIN) of the transmission device according to the variable amplification factor which can be set by a control signal (V_{GAIN}),
- a detector circuit (3,4) for recording an output signal of the amplifier circuit (1,2), and
- a comparator circuit (5) for comparing the output signal recorded by the detector circuit (3,4) with a reference signal and for generating the control signal (V_{GAIN}) for the amplifier circuit (1,2) as a function of the result of the comparison, whereby
control means (10) are provided for switching between a closed-loop controller and an open-loop controller of the transmission power, whereby the control means (10) are designed such that they deactivate the closed-loop control circuit to control the transmission power and supply an unregulated control signal (V_{GAIN}) to the amplifier circuit (1,2) for the corresponding adjustment of its variable amplification factor, **characterized in that** the control means (10) are designed such that they activate the closed-loop control circuit (1,3,4,5) to regulate the transmission power only in a range lying above a defined limit value of the output transmission power (P_{OUT}) supplied by the amplifier circuit (1,2), whereas the control means (10) deactivate the closed-loop control circuit (1,3,4,5) to perform the control of the transmission power, if the output transmission power (P_{OUT}) lies below the limit value, whereby a limit value is used so that regulation of the transmission power is activated only in the upper transmission power range.

2. Circuit arrangement according to Claim 1, **characterized in that** the limit value lies approximately 2dB below a maximum output transmission power (P_{OUT}) of the amplifier circuit (1,2).

3. Circuit arrangement according to one of the preceding claims,
**characterized in that**
the control means (10) are connected to an AD converter (9), which on the other side is connected via a first controllable switch (6) to the output of the comparator circuit (5), if the first controllable switch (6) is in a first position (B), and
that the control means (10) are connected to a DA converter (11), which on the other side is connected via a second controllable switch (7) to the amplifier circuit (1,2) in order to supply the control signal (V_{GAIN}), if the second controllable switch (7) is in a second position (7), while the output of the comparator circuit (5) is connected via the second controllable switch (7) to the amplifier circuit (1,2) in order to supply the control signal (V_{GAIN}), if the second controllable switch (7) is in a first position (B).

4. Circuit arrangement according to Claim 3,
**characterized in that**
the first and second controllable switch (6,7) is switched by the control means (10) into its first position (B) in each case to regulate the transmission power,
that the control means (10) are designed such that they read out the output voltage of the comparator circuit (5) before switching from regulation to control of the transmission power via the AD converter (9) and supply it to the DA converter (11), and
that the control means (10) are designed such that they switch from regulation to control of the transmission power, **in that** the first and second controllable switch (6,7) is in each case switched from its first position (B) to its second position (A).

5. Circuit arrangement according to one of the preceding claims,
**characterized in that**
a further closed-loop control circuit (12) is provided which is activated by the control means (10) in the event of control, in order to generate the voltage which is supplied in the event of regulation to the comparator circuit (5) as a reference signal, in order to receive the instantaneous output transmission power (P_{OUT}) in each case.

6. Circuit arrangement according to Claim 5 and Claim 3 or 4,
**characterized in that**
the further closed-loop circuit comprises the comparator circuit (5) and an inverting amplifier circuit (12),
that the comparator circuit (5) is connected on the input side via a third controllable switch (8) to the output of the inverting amplifier circuit (12), if the third controllable switch is in a second position (A), while the comparator circuit (5) is connected on the input side via the third controllable switch (8) to the output of the DA converter (11), if the third controllable switch (8) is in a first position (B), and that the inverting amplifier circuit (12) is connected on the input side to the output of the comparator circuit (5), whereby the inverting amplifier circuit (12) is moreover connected on the input side via the first controllable switch(6) to the AD converter (9), if the first controllable switch (6) is in its first position (B).

7. Circuit arrangement according to Claim 6,
**characterized in that**
the first, second and third controllable switch (6-8) is switched by the control means (10) to its second position (A) in order to control the transmission power in each case,
that the control means (10) are designed such that they read out the output voltage of the inverting amplifier circuit (12) before converting from control to regulation of the transmission power via the AD converter (9) and supply it to the DA converter (11), and
that the control means (10) are designed such that they switch from control to regulation of the transmission power, **in that** the first, second and third controllable switch (6-8) is in each case switched from its second position (A) to its first position (B).

8. Circuit arrangement according to Claim 6 or 7,
**characterized in that**
the control means (10) comprise storage means to store a characteristic curve, which for different output transmission power values (P_{OUT}) of the circuit arrangement comprises the corresponding control signal values (V_{GAIN}) for the amplifier circuit (1, 2) with the variable amplification factor, and
that the control means (10) in the event of control determine and generate the control signal value (V_{GAIN}) required for a particular set value of the output transmission power (P_{OUT}) on the basis of the characteristic curve and of the current values of the control signal (V_{GAIN}) and of the output voltage of the inverting amplifier circuit (12).

9. Circuit arrangement according to one of the preceding claims,
**characterized in that**
the comparator circuit (5) is a differential amplifier circuit, and that the detector circuit (3,4) comprises a power coupler (3), in order to decouple part of the output transmission power (P_{OUT}) of the amplifier circuit (1) with the variable amplification factor.

10. Use of a circuit arrangement according to one of the preceding claims in a mobile communication device to regulate or control the transmission power of the mobile communication device.

11. Use according to Claim 10,
**characterized in that**
the mobile communication device is a mobile communication device operated according to the CDMA multiple access method.

## Revendications

1. Circuit pour réguler la puissance d'émission d'un dispositif émetteur, le circuit présentant un circuit de réglage, lequel comprend
- un montage amplificateur (1, 2) ayant un facteur d'amplification variable pour amplifier une puissance d'émission d'entrée (P_{IN}) du dispositif émetteur selon le facteur d'amplification variable réglable par un signal de commande (V_{GAIN})
- un montage détecteur (3, 4) pour détecter un signal de sortie du montage amplificateur (1, 2) et
- un montage comparateur (5) pour comparer le signal de sortie détecté par le montage détecteur (3, 4) avec un signal de référence et pour générer le signal de commande (V_{GAIN}) pour le montage amplificateur (1, 2), en fonction du résultat de comparaison,
des moyens de commande (10) étant prévus pour commuter entre un réglage et une commande de la puissance d'émission,
les moyens de commande (10) étant conçus de telle manière qu'ils désactivent le circuit de réglage pour la commande de la puissance d'émission et amènent un signal de commande non réglé (V_{GAIN}) au montage amplificateur (1, 2) pour le réglage correspondant du facteur d'amplification variable,
**caractérisé en ce que**
les moyens de commande (10) sont conçus de telle manière qu'ils activent le circuit de réglage (1, 3, 4, 5) pour le réglage de la puissance d'émission seulement dans une gamme, située au-delà d'une certaine valeur limite, de la puissance d'émission de sortie (P_{OUT}) fournie par le montage amplificateur (1, 2), alors que les moyens de commande (10) désactivent le circuit de réglage (1, 3, 4, 5) pour réaliser la commande de la puissance d'émission, au cas où la puissance d'émission de sortie (P_{OUT}) est située en dessous de la valeur limite, une valeur limite étant utilisée, de sorte que le réglage de la puissance d'émission n'est activé que dans la gamme supérieure de puissance d'émission.

2. Circuit selon la revendication 1, **caractérisé en ce que**
la valeur limite est située env. 2 dB en dessous d'une puissance d'émission de sortie maximale (P_{OUT}) du montage amplificateur (1, 2).

3. Circuit selon l'une quelconque des revendications précédentes,
**caractérisé en ce que**
les moyens de commande (10) sont connectés à un convertisseur analogique-digital (AD) (9), lequel est d'autre part connecté à la sortie du montage comparateur (5) par l'intermédiaire d'un premier commutateur (6) commandable, au cas où le premier commutateur (6) commandable se trouve dans une première position (B), et
que les moyens de commande (10) sont connectés à un convertisseur digital-analogique (DA) (11), lequel est d'autre part connecté au montage amplificateur (1, 2), par l'intermédiaire d'un deuxième commutateur (7) commandable, pour amener le signal de commande (V_{GAIN}), au cas où le deuxième commutateur (7) commandable se trouve dans une deuxième position (A), alors que la sortie du montage comparateur (5) est connectée au montage amplificateur (1, 2) par I'intermédiaire du deuxième commutateur (7) commandable, pour amener le signal de commande (V_{GAIN}), au cas où le deuxième commutateur (7) commandable se trouve dans une première position (B).

4. Circuit selon la revendication 3,
**caractérisé en ce que**
le premier et le deuxième commutateurs (6, 7) commandables sont respectivement commutés dans leur première position (B) par les moyens de commande (10) pour régler la puissance d'émission,
que les moyens de commande (10) sont conçus de telle manière qu'ils lisent la tension de sortie du montage comparateur (5) avant une commutation du réglage à la commande de la puissance d'émission par l'intermédiaire du convertisseur analogique-digital (AD) (9) et qu'ils l'amènent au convertisseur digital-analogique (DA) (11), et
que les moyens de commande (10) sont conçus de telle manière qu'ils commutent du réglage à la commande de la puissance d'émission, du fait que le premier et le deuxième commutateurs (6, 7) commandables sont respectivement commutés de leur première position (B) sur leur deuxième position (A).

5. Circuit selon l'une quelconque des revendications précédentes,
**caractérisé en ce que**
un circuit de réglage supplémentaire (12) est prévu, lequel est activé par les moyens de commande (10) en cas de commande, afin de générer la tension qui devrait être amenée comme signal de référence au montage comparateur (5) en cas de réglage, pour obtenir la puissance d'émission de sortie respectivement actuelle (P_{OUT}).

6. Circuit selon la revendication 5 et la revendication 3 ou 4,
**caractérisé en ce que**
le circuit de réglage supplémentaire comprend le montage comparateur (5) et un montage amplificateur (12) inverseur,
que le montage comparateur (5) est connecté, côté entrée, à la sortie du montage amplificateur (12) inverseur par l'intermédiaire d'un troisième commutateur (8) commandable, au cas où le troisième commutateur commandable se trouve dans une deuxième position (A), alors que le montage comparateur (5) est connecté, côté entrée, à la sortie du convertisseur digital-analogique (DA) (11) par l'intermédiaire d'un troisième commutateur (8) commandable, au cas où le troisième commutateur (8) commandable se trouve dans une première position (B), et
que le montage amplificateur (12) inverseur est connecté, côté entrée, à la sortie du montage comparateur (5),
le montage amplificateur (12) inverseur étant connecté, côté entrée, en outre au convertisseur analogique-digital (AD) (9) par l'intermédiaire du premier commutateur (6) commandable, au cas où le premier commutateur (6) commandable se trouve dans sa première position (B).

7. Circuit selon la revendication 6,
**caractérisé en ce que**
le premier, le deuxième et le troisième commutateurs (6 - 8) commandables sont respectivement commutés dans leur deuxième position (A) par les moyens de commande (10) pour la commande de la puissance d'émission,
que les moyens de commande (10) sont conçus de telle manière qu'ils lisent la tension de sortie du montage amplificateur (12) inverseur par l'intermédiaire du convertisseur analogique-digital (AD) (9), avant une commutation de la commande au réglage de la puissance d'émission et qu'ils l'amènent au convertisseur digital-analogique (DA) (11), et
que les moyens de commande (10) sont conçus de telle manière qu'ils commutent de la commande au réglage de la puissance d'émission, du fait que le premier, le deuxième et le troisième commutateurs (6 - 8) commandables sont respectivement commutés de leur deuxième position (A) sur leur première position (B).

8. Circuit selon la revendication 6 ou 7,
**caractérisé en ce que**
les moyens de commande (10) comprennent des moyens de mémorisation pour mémoriser une courbe caractéristique, laquelle, pour différentes valeurs de puissance d'émission de sortie (P_{OUT}) du circuit, comprend les valeurs de signaux de commande (V_{GAIN}) correspondantes pour le montage amplificateur (1, 2) ayant le facteur d'amplification variable, et
que les moyens de commande (10), en cas de commande, déterminent et génèrent les valeurs de signaux de commande (V_{GAIN}) nécessaires pour une certaine valeur de réglage de la puissance d'émission de sortie (P_{OUT}) à l'aide de la courbe caractéristique et des valeurs actuelles du signal de commande (V_{GAIN}) et de la tension de sortie du montage amplificateur (12) inverseur.

9. Circuit selon l'une quelconque des revendications précédentes,
**caractérisé en ce que**
le montage comparateur (5) est un montage amplificateur différentiel, et
que le montage détecteur (3, 4) comprend un coupleur de puissance (3), afin de découpler une partie de la puissance d'émission de sortie (P_{OUT}) du montage amplificateur (1) ayant le facteur d'amplification variable.

10. Utilisation d'un circuit selon l'une quelconque des revendications précédentes dans un appareil radiotéléphonique mobile pour le réglage resp. la commande de la puissance d'émission de l'appareil radiotéléphonique mobile.

11. Utilisation selon la revendication 10,
**caractérisé en ce que**
l'appareil radiotéléphonique mobile est un appareil radiotéléphonique mobile exploité selon le procédé CDMA d'accès multiple.
